# EUROPÄISCHE PATENTANMELDUNG

(11) **EP 3 366 934 A1**
(43) Veröffentlichungstag der Anmeldung: **29.08.2018**
(21) Anmeldenummer: 17157470.0
(22) Anmeldetag: 22.02.2017
(51) Int. Cl.: F16B 29/00

(54) **ZENTRIERHILFE UND VERFAHREN ZUR BEFESTIGUNG**

(71) Anmelder: SFS Intec Holding AG, 9435 Heerbrugg (CH)
(72) Erfinder: Mair, Roland, 6840 Götzis (AT); Heinzmann, Thomas, 9008 St. Gallen (CH)

(57) **Zusammenfassung**

Eine Hülse (1) ist ausgelegt zur Zentrierung von Befestigern bei der Montage von Bauteilen wie Fassadenelementen an der Unterkonstruktion einer Gebäudehülle. Dazu umfasst sie einen Hülsenkörper, der einen im wesentlichen hohlzylindrischen Grundkörper mit einer Längsachse beschreibt. Der Grundkörper weist mindestens zwei Sollbruchstellen (3, 4) auf. Der Hülsenkörper besteht dabei aus mehreren Zylinderwand-Elementen (7, 8, 9, 10), die durch Stege oder Brücken verbunden sind, welche wiederum die Sollbruchstellen bilden. Bei der Montage von Fassadenelementen wird ein Befestigter in die Mittenöffnung eingesteckt, wobei die Hülse beim Eintreiben, nachdem sie ihre zentrierende und führende Wirkung erbracht hat, auseinanderbricht und keinen Bestandteil der finalen Befestigung mehr bildet.

## Beschreibung

Die vorliegende Erfindung befasst sich mit einer Zentrierhilfe zur genauen Positionierung von Schrauben beim Befestigen speziell von Fassadenplatten an einer Unterkonstruktion einer Gebäudehülle.

### HINTERGRUND

Im Bauwesen werden heute vor allem beim Büro- und Gewerbebau funktionelle Gebäudehüllen geschaffen, die hohe Anforderungen in punkto Sicherheit, Transparenz, Isolation, aber auch Design und Wartbarkeit erfüllen müssen. Speziell bei anspruchsvoller Architektur muss die technische Befestigung von Fassadenelementen so erfolgen, dass das Gesamtbild nicht beeinträchtigt wird.

Als Fassadenelemente werden dabei häufig farblich behandelte plattenförmige Bauteile mit und ohne Oberflächenstrukturen verwendet aus Materialien wie Faserzement, Holz, HPL (high pressure laminate - Papierlagen mit Kunststoff), Kunststoffe, Leichtmetall und Verbindungen bzw. Laminate dieser Materialien. Die Dicke dieser Platten beträgt üblicherweise zwischen 4 und 12 mm, je nach Material und Grösse des Elementes und Art der Befestigung. Die Fassadenelemente werden üblicherweise als letztes Element der Gebäudehülle auf einer Unterkonstruktion, häufig einem Gitter oder Raster aus Leichtmetallprofilen befestigt.

Eine weit verbreitete Befestigungsart für solche Fassadenelemente ist die sichtbare Verschraubung, bei der die Schraubenköpfe als Fassadenbestandteil sichtbar bleiben. Unabhängig von der Befestigungsart muss jedoch berücksichtigt werden, dass die Fassadenelemente und die Unterkonstruktion unterschiedlichen thermischen Belastungen unterliegen und somit sich unterschiedlich ausdehnen. Verspannungen der Fassadenelemente untereinander können aber Materialermüdung hervorrufen.

Dieses Problem wird häufig so gelöst, dass die Fassadenelemente Durchgangsbohrungen aufweisen, deren Durchmesser grösser gewählt wird als der nominelle Aussendurchmesser des Gewindes der Befestigungsschrauben. Dadurch hat jedes Fassadenelement Spiel in seiner Befestigungsebene. Der Kopfdurchmesser der Schrauben muss konsequenterweise grösser gewählt werden als der Durchmesser der Bohrungen im Fassadenelement.

Damit entsteht jedoch bei der Montage der Befestigungselemente das Problem, dass die überdimensionierte Bohrung im Fassadenelement der Schraube beim Eindrehen keine Führung bieten kann und somit ein Verkippen oder Versetzen der Schraube möglich ist - was wiederum das angestrebte Ziel der "Befestigung mit Spiel" gefährden würde. Diese Gefahr wird dadurch verschärft, dass zur Montage häufig selbstbohrende und selbstschneidende Schrauben verwendet werden, bei denen ein entsprechend hoher Kraftaufwand nötig ist, bis die Bohrspitze bzw. das Gewinde greift.

### STAND DER TECHNIK

Im Stand der Technik wird dies beispielsweise so gelöst, dass in die Durchgangsbohrung des Fassadenelementes eine Hülse mit einem Kragen und einem Boden eingesetzt wird (vgl. Fig. 1). Der Aussendurchmesser der Hülse (ohne Kragen) entspricht dabei im Wesentlichen dem Bohrungsdurchmesser im Fassadenelement und die Länge der Hülse der Dicke des Fassadenelementes. Der Boden kann ein mittiges Loch oder eine Vertiefung aufweisen, die für eine angesetzte Schraube eine Zentrierung erlaubt (vgl. Fig. 2). Je nachdem, wie gross der freie Innendurchmesser der Hülse ist, kann auch eine Führungswirkung für die Schraube erreicht werden. Der Kragen der Hülse hat im endmontierten Zustand (Fig. 3) zudem eine dichtende wie auch dämpfende Wirkung, weil der Schraubenkopf auf dem Kragen wie auf einer Unterlagscheibe aufliegt.

Um universeller für verschiedene Fassadenelement-Dicken schlägt die EP 2 151 589 vor, eine solche Hülse als Teleskophülse auszubilden mit einer Sollbruchstelle zwischen den beiden konzentrischen Hülsenanteilen. Beim Einbau wird dadurch die Hülse durch die eindrehende Schraube auf exakt die benötigte Länge bzw. Bohrtiefe des Fassadenelements durch Ineinanderschieben der beiden Hülsenelemente verkürzt.

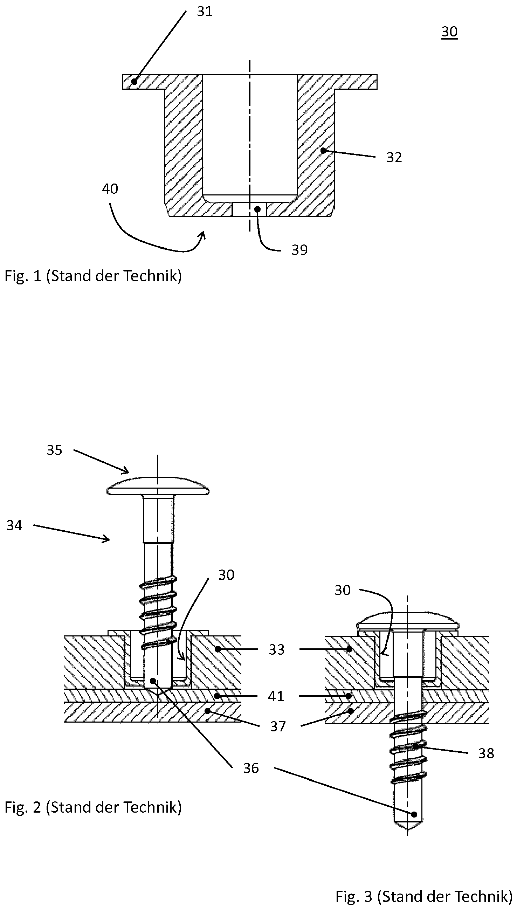

Als nachteilig hat sich bei Hülsen gemäss Figur 1 erwiesen, dass der Boden durch den Einschraubvorgang nicht nur aufgeweitet, sondern auch deformiert werden kann. Auch ein Mitnahmeeffekt an der eindrehenden Schraube kann vorkommen, was, speziell bei Hülsen aus Thermoplasten durch Reibung zu einem Aufweichen bzw. Aufschmelzen führt. Im schlimmsten Fall wickelt sich die Hülse um den Schraubenschaft und wird zerstört. Auch kann es bei sehr starkem Eindrehen passieren, dass der Kragen beim Anschlag des Schraubenkopfs am Fassadenelement gequetscht oder deformiert wird und seitlich unter dem Schraubenkopf hervortritt. Die Korrektur so eines Montagefehlers wird, insbesondere wenn rückdrehsichere Schrauben verwendet wurden, sehr aufwändig.

Die vorliegende Erfindung hat daher die Aufgabe, diese Nachteile des Standes der Technik zu vermeiden, insbesondere eine sichere und einfache Montage von Fassadenelemente der beschriebenen Gattung zu ermöglichen und eine zentrierte und geführte Montage der Befestigungsschraube zu gestatten.

### BESCHREIBUNG DER ERFINDUNG

Dies wird durch eine Zentrierhilfe bzw. Zentrierhülse oder Hülse gemäss den Merkmalen des unabhängigen Vorrichtungsanspruchs bzw. durch einen Montagevorgang gemäss den Schritten des Verfahrensanspruches erzielt. Die abhängigen Merkmale beschreiben nützliche Varianten und Weiterbildungen der Erfindung.

Die erfindungsgemässe Hülse ist ein nur zur Montage gedachtes, nur einmal zu verwendendes Produkt, das einen Befestiger zu Beginn des Montagevorgangs stabilisiert (zentriert und führt) und beim weiteren Eintreiben des Befestigers aufgebrochen wird und dem finalen Einschraubvorgang nicht mehr im Wege steht. Damit ist auch die resultierende Befestigung frei von Hülsenbestandteilen.

Eine erfindungsgemässe Hülse 1 dient somit zur Zentrierung von Befestigern bei der Montage von Bauteilen wie Fassadenelementen an der Unterkonstruktion einer Gebäudehülle. Sie umfasst einen Hülsenkörper 2, der einen im wesentlichen hohlzylindrischen Grundkörper mit einer Längsachse A aufweist und, in der grundlegendsten Ausführung, mindestens zwei Sollbruchstellen 3, 4 aufweist.

In einer Ausführungsform umfasst der Hülsenkörper 2 mehrere Zylinderwand-Elemente 7, 8, 9, 10, die durch Stege oder Brücken verbunden sind, die wiederum die Sollbruchstellen 3, 4, 5, 6 bilden. Die Ausgestaltung dieser Zylinderwandelemente, zwischen denen die Sollbruchstellen angeordnet sind, kann variieren. Bevorzugt wird der Hülsenkörper 2 mindestens zwei längsausgedehnte, axial orientierte Spalten 11, 12, 13, 14 aufweisen, die von aussen radial nach innen verlaufen und somit zwischen den Zylinderwand-Elementen 7, 8, 9, 10 angeordnet sind und durch die Sollbruchstellen 3,4,5,6 überbrückt werden. Mit Spalte sind dabei in breitester Fassung längliche Öffnungen wie Schlitze oder Gräben gemeint, die von der Oberfläche des Hülsenkörpers in das Material reichen. Die Sollbruchstellen sind somit Elemente oder Bauteile, die diese Spalte überbrücken oder abschliessen (im Sinne eines Bodens) und zum Beispiel eine geringere Wandstärke haben als die Zylinderwandelemente oder aus einem anderen Material bestehen oder allgemein andere Materialeigenschaften haben. Weiterhin kann der Hülsenkörper 2 an einem ersten Hülsenende 15 eine konische oder kegelförmige Vertiefung 17 aufweisen. Diese Vertiefung wird bevorzugt so ausgeführt, dass sie zentralsymmetrisch zur Längs- oder Mittenachse A liegt, was bedeutet, dass die Spitze des Konus bzw. Kegels auf der Mittenachse liegt. Die Neigung der Konus- bzw. Kegelflächen zu einer Ebene normal zur Längsachse beträgt bevorzugt zwischen 20° und 45°. Der Konus bzw. Kegel bildet eine Kontaktfläche für den Rand des Befestiger-Kopfes beim Eintreiben des Befestigers. Dieser Winkel wird ähnlich bei einem Keil also die effektive, radial nach aussen wirkende Kraftkomponente mitbestimmen, die beim Montagevorgang die Hülse letztendlich aufweitet und an den Sollbruchstellen auftrennt. Die notwendige bzw. gewünschte Kraft wird also durch die Gestaltung der Sollbruchstellen wie auch die Materialeigenschaften bestimmt.

Ferner wird die Hülse 1 bzw. der Hülsenkörper 2 an seinem zweiten, dem ersten Hülsenende 15 gegenüberliegenden Ende 16 eine weitgehend plane Auflagefläche 19 mit vorstehenden Kragenelementen 18 aufweisen. Diese Kragenelemente 18 haben die Aufgabe, in die im Fassadenelement vorhandene Bohrung einzugreifen. Da diese, wie oben ausgeführt grösser ist als der Durchmesser des Schaftes des Befestigers, behindern die Kragenelemente nicht den Durchtritt des Befestigers während der Montage. Bevorzugt werden die Kragenelemente (18) am Hülsenkörper 2 eine ringförmige Struktur bilden mit radial nach aussen weisenden Flächen, die als Anschlag am Innenumfang einer Bohrung dienen können, auf die die Hülse aufgesteckt wird. Mit ringförmiger Struktur ist gemeint, dass die Elemente auf einem Kreis angeordnet sind, dessen Mittelpunkt auf der Achse A liegt.

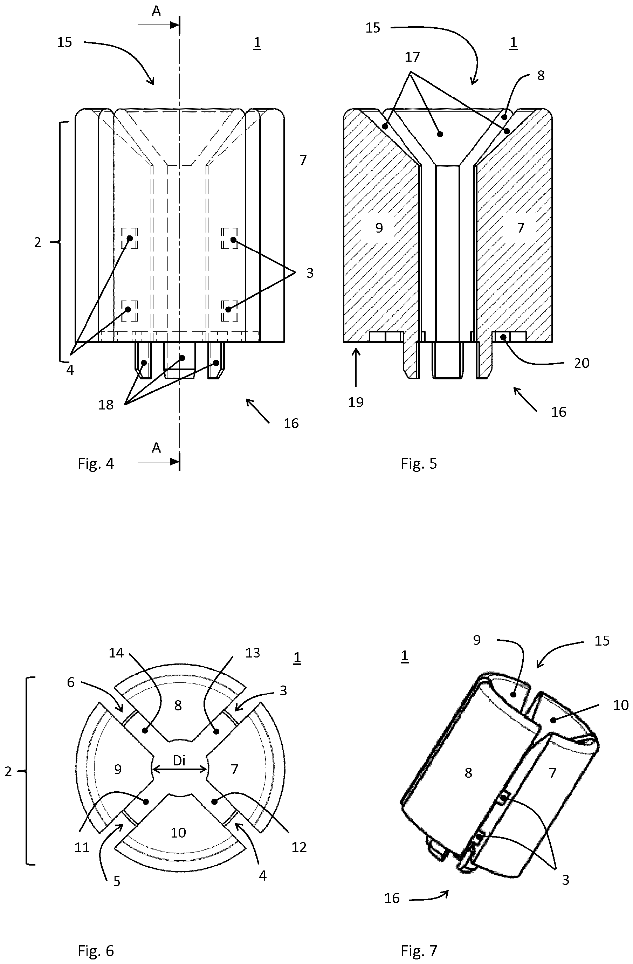

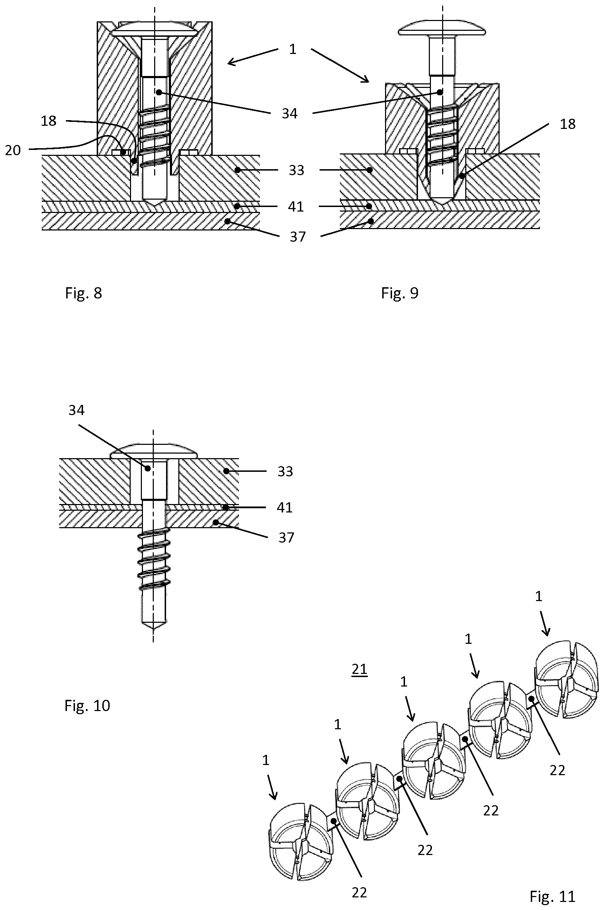

In einer weiteren Ausführungsform weist die Hülse 1 in der Auflagefläche 19 eine radial umlaufende, zur Achse A konzentrische verlaufende Rille auf. Diese Rille verkleinert die effektive Grösse der Auflagefläche und verlagert somit den Druck beim Eintreiben zumindest teilweise auf den radial aussen liegenden Rand. Zudem kann dieser Ringspalt die Funktion erfüllen, Randunebenheiten der Bohrung im Fassadenelement aufzunehmen, was letztlich eine stabilere Auflage der Hülse erlaubt. Die erwähnten Kragenelemente können vielfältige Formen aufweisen, beispielsweise wie in den Figuren 4 und 5 gezeigt als Zungen oder wie in Figur 9 sichtbar als komplexere Elemente, die weitere Zentrierhilfen für den Befestiger aufweisen

Hülsen der beschriebenen Art lassen sich als Spritzgiesselemente in Massen einfach fertigen. Als Material ist besonders geeignet Kunststoff, insbesondere ein biologisch abbaubarer Kunststoff, gepresstes Fasermaterial, insbesondere auf Basis von Zellulose oder recyceltem Papierfaser-Material oder ein Materialmix aus den vorgenannten Stoffen. Nachdem die erfindungsgemässen Hülsen für den Einmalgebrauch gedacht sind und durch den Montagevorgang abgesprengt werden, ist ein Material, das nicht separat entsorgt werden muss, von Vorteil.

Betrachtet man die Anwendung einer Hülse 1 gemäss der Erfindung in einem Verfahren zur Befestigung eines Fassadenelementes an der Unterkonstruktion einer Gebäudehülle, so lässt sich dies in folgende Schritte gliedern: a) Das Einsetzen einer Hülse wie oben beschrieben in eine vorhandene Bohrung des besagten Fassadenelementes, so dass die Kragenelemente 18 am Innenumfang der Bohrung anliegen. b) Das Einführen eines Befestigers mit Werkzeugangriff am Kopf in die Längsöffnung der Hülse; c) das Antreiben der Befestigers über den Werkzeugangriff (mittels eines Handwerkzeugs oder maschinell); d) das Einsenken des Befestigers in die Unterkonstruktion, wobei durch die Hülse 1 eine Zentrierung in der Bohrung des Fassadenelementes erzielt wird. Durch das Eintreiben wird schliesslich ein e) Aufsprengen der Hülse 1 entlang der Sollbruchstellen (3, 4, 5, 6) durch das Einwirken des Befestigers auf die konische oder kegelförmige Vertiefung 17 erreicht, was wiederum dazu führt, dass die Hülse aus dem Bohrloch ausgeworfen wird. Das bewirkt bei der f) Fertigstellung der Befestigung, dass kein Rest der Hülse 1 im Verbund Schraube - Fassadenelement - Unterkonstruktion verbleibt

Im Schritt a) wird mit dem Begriff "Einsetzen" das Einführen der Kragenelemente in die vorgesehene Bohrung des Fassadenelementes gemeint, was dazu führt, dass die Bodenfläche oder Auflagefläche (19) auf der Oberfläche des Fassadenelementes aufliegt und die Kragenelemente (18) den Hülsenkörper zentrisch zur Bohrung ausrichten. Mit dem Begriff "Einsenken" in Schritt d) wird das Vordringen des Befestigers bei der Montage gemeint, hervorgerufen durch ein Gewinde oder durch den vom Werkzeug ausgeübten Druck auf den Befestiger.

Alternativ kann der Befestiger bereits vorab in die Hülse eingesetzt werden, so dass in der Logik der beschriebenen Prozessschritte der Schritt a) mit einer bereits in die Hülse eingesetztem Befestiger erfolgt und Schritt b) entfällt.

Die oben beschriebenen Verfahrensschritte und die Anwendbarkeit einer Hülse gemäss der Erfindung wird bevorzugt mit einer Schraube als Befestiger durchgeführt, womit die Befestigung (des Fassadenelementes) zu einer Verschraubung wird. Alternativ kann als Befestiger auch ein Nagel oder Bolzen verwendet werden.

Die Dimensionierung der erfindungsgemässen Hülse wird durch den Anwendungsfall, insbesondere die Länge des Befestigers und die Dicke des Fassadenelementes, massgeblich mitbestimmt. Die Länge der Hülse kann dabei bevorzugt zwischen wenigen Millimetern bis 3cm liegen, insbesondere 1-2cm. Die Länge der Kragelemente, genauer ihr Vorstehmass wird wenige Millimeter, bevorzugt bis 5mm betragen.

Die Kombinierbarkeit der oben beschriebenen technischen Merkmale miteinander (einzeln, in Gruppen oder als Ganzes) ist mit Ausnahme offensichtlich technischer Inkompatibilität vorausgesetzt. Auch wenn nicht jede beliebige Kombinationsart explizit beschrieben wurde soll deshalb eine Kombination nicht als nicht möglich oder nicht offenbart gelten.

### BESCHREIBUNG DER FIGUREN

Die Figuren 1 bis 3 beziehen sich auf Ausführungen gemäss dem Stand der Technik. Figur 1 zeigt eine Hülse 30 mit im Wesentlichen einem Hülsenkörper 32, einem vorstehenden, flanschartigen Kragen 31 und einen am anderen Hülsenende befindlichen Boden 40, der bevorzugt ein Mittenloch 39 oder eine Vertiefung im Boden 40 aufweist, um einen eingeführten Befestiger zu zentrieren.

Figur 2 zeigt den Beginn einer Montagesituation, wo eine Hülse 30 in ein Fassadenelement 33 eingesetzt ist und ein Befestiger 34 mittig in der Hülse 30 zentriert wurde. Es ist aus der Zeichnung verständlich, dass der Befestiger 34 seitlich trotz Mittenzentrierung kippen kann. Der Befestiger umfasst einen Kopf 35 und (hier speziell) eine Bohrspitze 36 mit, am Schaft nachfolgend, einem Gewinde 38. Figur 3 zeigt die Situation nach Ende der Montage. Die Hülse 30 befindet sich versenkt im Bohrloch, der Kragen 31 bildet eine Unterlagscheibe für den Kopf 35 des Befestigers 34. Die Bohrspitze 36 hat sich durch eine (optionale) Zwischenlage 41 zwischen Fassadenelement 33 und Unterkonstruktion 37 gebohrt und das Gewinde 38greift in besagte Unterkonstruktion 37 ein. Die Zwischenlage 41 kann eine dämpfende, isolierende oder dichtende Funktionsschicht sein.

Die Figuren 4 bis 7 zeigen die erfinderische Hülse 1 in der Seitenansicht (Fig. 4), einem Längsschnitt durch den Hülsenkörper 2 (Fig. 5), einer Draufsicht von oben auf den hohlzylindrischen Körper (Fig. 6) und in einer 3-D Ansicht (Fig. 7)
Die Hülse 1 in Figur 4 bis 7 ist aus 4 gleichartigen Zylinderwandsegmenten 7, 8, 9, 10 aufgebaut, die durch Spalte 11, 12, 13, 14 voneinander getrennt sind. In den Spalten 11, 12, 13, 14 sind Brückenelemente vorgesehen, die als Sollbruchstellen 3, 4, 5, 6 bezeichnet sind. In den Figuren sind sie als kleine Stege ausgeführt. Am ersten (oberen) Hülsenende 15 befindet sich eine konische oder trichterförmige Vertiefung 17, am gegenüberliegenden, zweiten (unteren) Hülsenende 16 erstreckt sich eine Auflagefläche 19, in der sich wiederum eine Rille oder kreisförmige Vertiefung 20 befindet. Aus der Auflagefläche ragen Kragenelemente 18 heraus, welche, wie oben beschrieben und später in den Figuren 8 und 9 gezeigt, in eine Bohrung in einem Fassadenelement eingreifen. Wie in Figur 11 gezeigt, ist es möglich eine Vielzahl von Hülsen 1 durch auftrennbare Stege 22 zu verbinden, um z.B. einen Magazinstreifen 21 zu bilden.

Die Figuren 8 bis 10 zeigen die Montagesituation mit einer erfindungsgemässen Hülse 1. Die Hülse ist in Figur 8 und 9 in verschiedenen Ausführungen (Baulängen) gezeigt, mit eingesetztem Befestiger 34. Deutlich erkennbar ist, wie die Kragenelemente 18 die Hülse 1 im Bohrungsloch des Fassadenelements 33 zentrieren. Ebenso ist ersichtlich, dass nicht nur eine Zentrierung, sondern eine Führung durch die Hülse 1 gegeben ist. Der lichte Innendurchmesser Di (vgl. Figur 6) der Hülse ist nur wenig grösser als der Aussendurchmesser des Befestigers 34. Beim Eintreiben soll kein Mitnahmeeffekt (Mitdrehen mit dem Befestiger) vorkommen, sondern nur die senkrechte Ausrichtung des Befestigers gewährleistet werden. Der Aufbau der Unterkonstruktion 37 mit einer Zwischenlage 41 ist derselbe wie in Figur 1-3. Die Verwendung der Zwischenlage oder sogar mehrerer Zwischenlagen ist optional.

Beim Eintrieben des Befestigers wird die Hülse 1 zerstört und durch den Befestiger zur Seite verdrängt. Die einzelnen Zylinderwand-Elemente werden samt Kragenelementen 18 aus dem Bohrloch gehebelt und fallen zu Boden. Als Endresultat sieht man in Figur 10 die fertige Befestigung (Verschraubung), wobei der komplette Innendurchmesser der Bohrung im Fassadenelement als Spiel zur Verfügung steht, im Gegensatz zur Situation in Figur 3, wo dieser Bereich durch die Hülse 30 gemäss Stand der Technik eingeengt wird.

### BEZUGSZEICHENLISTE

- 1: Hülse
- 2: Hülsenkörper
- 3, 4, 5, 6: Sollbruchstelle(n)
- 7, 8, 9, 10: Zylinderwand-Element(e)
- 11, 12, 13, 14: Spalte(n)
- 15: erstes Hülsenende
- 16: zweites Hülsenende
- 17: konische oder kegelförmige Vertiefung
- 18: Kragenelemente
- 19: Auflagefläche
- 20: Rille, ringförmige Vertiefung
- 21: Magazinstreifen
- 22: Steg

- 30: Hülse
- 31: Kragen
- 32: Hülsenkörper
- 33: Fassadenelement
- 34: Befestiger
- 35: Kopf (des Befestigers)
- 36: Bohrspitze
- 37: Unterkonstruktion
- 38: Gewinde
- 39: Mittenloch
- 40: Boden
- 41: Zwischenlage

- A: Längsachse

## Patentansprüche

1. Hülse (1) zur Zentrierung von Befestigern bei der Montage von Bauteilen wie Fassadenelementen an der Unterkonstruktion einer Gebäudehülle; mit einem Hülsenkörper (2), der einen im wesentlichen hohlzylindrischen Grundkörper mit einer Längsachse (A) umfasst, **dadurch gekennzeichnet, dass** der Grundkörper (2) mindestens zwei Sollbruchstellen (3, 4) aufweist.

2. Hülse (1) nach Anspruch 1, **dadurch gekennzeichnet, dass** der Hülsenkörper (2) mehrere Zylinderwand-Elemente (7, 8, 9, 10) umfasst, die durch Stege oder Brücken verbunden sind, die wiederum die Sollbruchstellen (3, 4, 5, 6) bilden.

3. Hülse (1) nach Anspruch 1 oder 2, **dadurch gekennzeichnet, dass** der Hülsenkörper (2) mindestens zwei längsausgedehnte, axial orientierte Spalten (11, 12, 13, 14) aufweist, die von aussen radial nach innen verlaufen und somit zwischen den Zylinderwand-Elementen (7,8,9,10) angeordnet sind und durch die Sollbruchstellen (3,4,5,6) überbrückt werden.

4. Hülse (1) nach Anspruch 1 bis 3, **dadurch gekennzeichnet, dass** der Hülsenkörper (2) an einem ersten Hülsenende (15) eine konische oder kegelförmige Vertiefung (17) aufweist.

5. Hülse (1) nach Anspruch 1 bis 4, **dadurch gekennzeichnet, dass** der Hülsenkörper (2) an seinem zweiten, dem ersten Hülsenende (15) gegenüberliegenden Ende (16) eine weitgehend plane Auflagefläche (19) mit vorstehenden Kragenelementen (18) aufweist.

6. Hülse (1) nach Anspruch 5, **dadurch gekennzeichnet, dass** die Anordnung der Kragenelemente (18) am Hülsenkörper (2) eine ringförmige Struktur bildet mit radial nach aussen weisenden Flächen, die als Anschlag am Innenumfang einer Bohrung dienen können, auf die die Hülse aufgesteckt wird.

7. Hülse (1) nach Anspruch 5 und/oder 6, **dadurch gekennzeichnet, dass** in der Auflagefläche (19) eine radial umlaufende, zur Achse A konzentrische verlaufende Rille (20) angeordnet ist.

8. Hülse (1) nach Anspruch 1-7, **dadurch gekennzeichnet, dass** das Material der Hülse ein Kunststoff, insbesondere ein biologisch abbaubarer Kunststoff, gepresstes Fasermaterial, insbesondere auf Zellulose oder recycelten Papierfaser Material oder ein Materialmix aus den vorgenannten Stoffen ist.

9. Magazinstreifen (21), umfassend eine Mehrzahl von Hülsen (1) nach Anspruch 1-8, wobei die Hülsen (1) über abtrennbare Stege (22) miteinander verbunden sind.

10. Verfahren zur Befestigung eines Fassadenelementes an der Unterkonstruktion einer Gebäudehülle, mit den folgenden Schritten:
a) Einsetzen einer Hülse gemäss Anspruch 1-8 in eine vorhandene Bohrung des besagten Fassadenelementes, so dass die Kragenelemente (18) am Innenumfang der Bohrung anliegen
b) Einführen eines Befestigers mit Werkzeugangriff am Kopf in die Längsöffnung der Hülse
c) Antreiben der Befestigers über den Werkzeugangriff
d) Einsenken des Befestigers in die Unterkonstruktion, wobei durch die Hülse (1) eine Zentrierung in der Bohrung des Fassadenelementes erzielt wird
e) Aufsprengen der Hülse (1) entlang der Sollbruchstellen (3,4,5,6) durch das Einwirken des Befestigers auf die konische oder kegelförmige Vertiefung (17)
f) Fertigstellung der Befestigung derart, dass kein Rest der Hülse (1) im Verbund Schraube - Fassadenelement - Unterkonstruktion verbleibt.

11. Verfahren nach Anspruch 10, **dadurch gekennzeichnet, dass** Schritt a) mit einer bereits in die Hülse eingesetztem Befestiger erfolgt und Schritt b) entfällt

12. Verfahren nach Anspruch 9 oder 10, **dadurch gekennzeichnet, dass** die Befestigung eine Verschraubung ist und der Befestiger eine Schraube.

13. Verfahren nach Anspruch 9 oder 10, **dadurch gekennzeichnet, dass** der Befestiger ein Nagel oder Bolzen ist.
